# EUROPEAN PATENT APPLICATION

(11) **EP 3 933 615 A1**
(43) Date of publication of application: **05.01.2022**
(21) Application number: 20763507.9
(22) Date of filing: 18.02.2020
(51) Int. Cl.: G06F 16/532

(54) **DATA STORAGE METHOD AND DATA QUERY METHOD**

(30) Priority: 25.02.2019 CN 201910139006
(71) Applicant: ALIBABA GROUP HOLDING LIMITED, George Town, Grand Cayman (KY)
(72) Inventor: LUO, Yi, Hangzhou, Zhejiang 311121 (CN)
(74) Representative: Patentgruppen A/S
(86) International application number: PCT/CN2020/075690
(87) International publication number: WO 2020/173334

(57) **Abstract**

The present invention discloses a data storage method and a data query method, wherein the data storage method comprises the steps of: determining whether to-be-stored data belongs to a predetermined data type; if the data belongs to the predetermined data type, storing the data into a first storage region, and acquiring a directory address of the data; extracting a feature vector of the data; and associatively storing the feature vector with the directory address of the data into a second storage region. The present invention further discloses a corresponding data management system and computing device.

## Description

The present application claims priority to Chinese patent application No. 201910139006.X filed on February 25, 2019, and entitled "DATA STORAGE METHOD AND DATA QUERY METHOD," which is incorporated herein by reference in its entirety.

### TECHNICAL FIELD

The present invention relates to the technical field of data processing, and more particularly, to a data storage method and a data query method.

### BACKGROUND

Traditional query languages (such as SQL) applied to database management systems are all designed for structured data to facilitate data accessing, querying, updating, and management. A traditional semantic retrieval method is generally based on data itself, and the meaning behind the data is usually ignored.

With the rapid development of the artificial intelligence field, unstructured data, such as audios, videos, images, and text, has been increasingly applied to other areas. For the unstructured data, the semantics contained therein can only be learned through identification. Therefore, for the processing of this type of data, acquiring the meaning behind the data is often needed.

Some existing database systems may support vector storage and retrieval. Thus, when a user uses a database to query unstructured data, for example, querying an image, calling a special service outside the database to convert the image into a vector becomes necessary; and then the vector is stored into the database. In a subsequent query or retrieval, the user may also perform retrieving using the vector. For this processing manner, on the one hand, the process is relatively complicated; on the other hand, the requirement for the user is too high in that the user needs to convert the image into the vector. Further, vectors have no intuitive meaning for the user, which increases the user cost.

In view of this, a data management method capable of supporting both structured data and unstructured data is needed to implement data storage, query/retrieval, and the like.

### SUMMARY

Therefore, the present invention provides a data storage method and a data query method, aiming to resolve or at least alleviate at least one of the above problems.

According to one aspect of the present invention, a data storage method is provided, the method comprising the steps of: determining whether to-be-stored data belongs to a predetermined data type; if the data belongs to the predetermined data type, storing the data into a first storage region, and acquiring a directory address of the data; extracting a feature vector of the data; and associatively storing the feature vector with the directory address of the data into a second storage region.

Optionally, the data storage method according to the present invention further comprises the step of: if it is confirmed after the determination that the to-be-stored data does not belong to the predetermined data type, storing the data into the second storage region.

Optionally, in the data storage method according to the present invention, the step of extracting a feature vector of the data comprises: inputting the directory address of the data into a feature extraction model to output the feature vector of the data.

Optionally, the data storage method according to the present invention further comprises the steps of: acquiring description information of the data and associatively storing the description information with the directory address of the data, wherein the description information at least comprises: the feature extraction model for extracting the feature vector and a measurement method for computing a feature similarity level.

Optionally, in the data storage method according to the present invention, the step of extracting the feature vector of the data further comprises: extracting, based on the description information and the directory address of the data, the feature vector corresponding to the data; more specifically, acquiring, according to the description information of the data, the feature extraction model for extracting the feature vector and corresponding to the data; and inputting the directory address into the feature extraction model to output the feature vector corresponding to the data.

Optionally, in the data storage method according to the present invention, the predetermined data type comprises one or more of the following data types: text, pictures, XML, HTML, images, audios, and videos.

According to another aspect of the present invention, a data storage apparatus is provided, the apparatus comprising: a determining unit, suitable for determining whether to-be-stored data belongs to a predetermined data type; a first storage unit, suitable for storing the data and generating a directory address of the data when the data belongs to the predetermined data type; a feature extraction unit, suitable for extracting a feature vector of the data; and a second storage unit, suitable for associatively storing the feature vector with the directory address of the data.

Optionally, the data storage apparatus according to the present invention further comprises: a metadata storage unit, suitable for acquiring description information of the data when the to-be-stored data belongs to the predetermined data type, and associatively storing the description information with the directory address of the data.

According to another aspect of the present invention, a data query method is provided, the method comprising the steps of: generating at least one to-be-queried feature vector; determining at least one feature vector similar to the to-be-queried feature vector; acquiring at least one directory address associated with the determined at least one feature vector; and determining at least one piece of data pointed to by the acquired at least one directory address as target data.

According to another aspect of the present invention, a data query method is provided, the method comprising the steps of: acquiring at least one to-be-queried feature vector; determining at least one feature vector similar to the to-be-queried feature vector; acquiring at least one directory address associated with the determined at least one feature vector; and determining at least one piece of data pointed to by the acquired at least one directory address as target data.

According to yet another aspect of the present invention, a data query apparatus is provided, the apparatus comprising: a determining unit, suitable for determining whether query information contains a predetermined data type; a feature computing unit, suitable for generating, based on the query information, at least one to-be-queried feature vector, and is further suitable for determining at least one feature vector similar to the to-be-queried feature vector; a first query unit, suitable for acquiring, from a second storage region, at least one directory address associated with the determined at least one feature vector; and a second query unit, suitable for determining, from a first storage region, at least one piece of data pointed to by the acquired at least one directory address as target data.

According to yet another aspect of the present invention, a data management system is provided, comprising: the above-mentioned data storage apparatus and the above-mentioned data query apparatus.

According to yet another aspect of the present invention, a computing device is provided, comprising: at least one processor, and a memory having a program instruction stored therein, wherein the program instruction is configured to be executed by the at least one processor and comprises instructions for executing the above-mentioned data storage method and data query method.

According to yet another aspect of the present invention, a readable storage medium having a program instruction stored therein is provided. When the program instruction is read and executed by a computing device, the computing device is enabled to execute the above-mentioned data storage method and data query method.

According to the solutions of the present invention, structured data and unstructured data are stored separately, for example, the unstructured data being stored in the first storage region, and the structured data being stored in the second storage region. The feature vector of the unstructured data is generated through a built-in feature extraction service. The feature vector and a storage address (i.e., the directory address) of the unstructured data are associatively stored into the second storage region. In this way, the storage of various unstructured data may be directly supported. At the same time, on the basis of this data storage manner, both queries for the structured data and semantic-based queries for various unstructured data are supported. In addition, users do not need to have a deep understanding of related deep learning algorithms and feature extraction models, thereby effectively reducing the requirements of users and the user cost.

The above description is only an overview of the technical solutions of the present invention. In order for those skilled in the art to better understand the technical means of the present invention, and further to implement in accordance with the content of the specification, and in order to make the above and other purposes, features, and advantages of the present invention more obvious and understandable, the specific implementation manners of the present invention are illustrated below.

### BRIEF DESCRIPTION OF DRAWINGS

In order to achieve the above and related objectives, certain illustrative aspects are described herein in combination with the following description and accompanying drawings. These aspects are indicative of various ways in which the principles disclosed herein may be realized. All the aspects and equivalents thereof are intended to fall within the protection scope of the claimed subject matter. The above and other objectives, features, and advantages of the present disclosure will become more apparent from reading through the following detailed description in combination with the accompanying drawings. Throughout the present disclosure, like reference numerals generally refer to same parts or elements.
FIG. 1 shows an environmental schematic diagram of a data management system 100 according to an embodiment of the present invention;
FIG. 2 shows a schematic diagram of a data management system 100 according to an embodiment of the present invention;
FIG. 3 shows a schematic diagram of a computing device 300 according to an embodiment of the present invention;
FIG. 4 shows a flowchart of a data storage method 400 according to an embodiment of the present invention; and
FIG. 5 shows a flowchart of a data query method 500 according to an embodiment of the present invention.

### DESCRIPTION OF EMBODIMENTS

In what follows exemplary embodiments of the present disclosure will be described below in more detail with reference to the accompanying drawings. Although the accompanying drawings show the exemplary embodiments of the present disclosure, it should be understood that the present disclosure may be implemented in various forms and should not be limited by the embodiments set forth herein. Rather, these embodiments are provided to enable a more thorough understanding of the present disclosure and to fully convey the scope of the present disclosure to those skilled in the art.

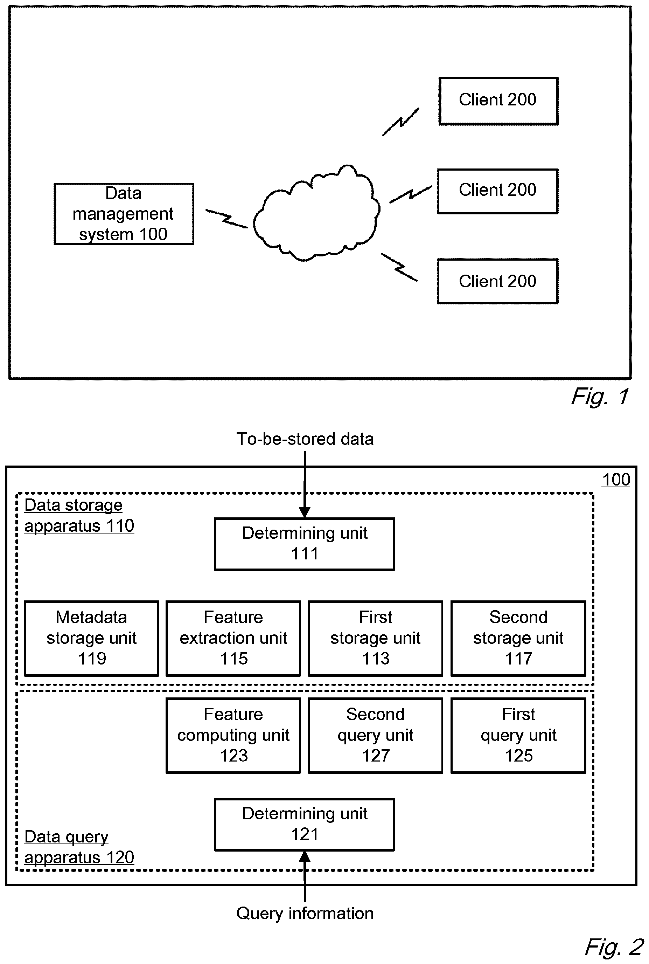

FIG. 1 shows an environmental schematic diagram of a data management system 100 according to an embodiment of the present invention. As shown in FIG. 1, the data management system 100 and clients 200 are communicatively connected. Although only three clients 200 are shown in FIG. 1, it should be understood that in practice, a large number of clients 200 are present, which might be presented in various forms, including but not limited to, mobile terminals, personal computers, personal digital assistants, and the like. The present invention is not limited by types of the clients 200, so long as users may use the clients 200 to send data storage requests and/or data query requests to the data management system 100, receive results returned by the system 100, and the results are displayed in the clients 200.

For example, the clients 200 may be computing devices. The data storage requests are sent to the system 100 through applications installed on the computing devices, and structured data and/or unstructured data is stored into corresponding locations in the system 100. At the same time, the system 100 may use the stored data to provide query/retrieval services for the clients 200. For another example, the clients 200 may be mobile terminals. The data query requests are sent to the system 100 through applications installed on the mobile terminals, and query results are displayed on interfaces of the mobile terminals.

FIG. 2 shows a schematic diagram of a data management system 100 according to an embodiment of the present invention. As shown in FIG. 2, the data management system 100 according to the embodiment of the present invention includes a data storage apparatus 110 and a data query apparatus 120. According to an implementation manner of the present invention, the data storage apparatus 110 is mainly used to store data. In the embodiment according to the present invention, the stored data may be structured data, and may also be unstructured data such as text, pictures, XML, HTML, images, audios, and videos. When a user initiates an operation request for storing the data, in response to the operation of the user storing the data, to-be-stored data is stored in a corresponding storage region according to a data type of the data. According to an embodiment, if the to-be-stored data is unstructured data (for example, text, pictures, XML, HTML, images, audios, and videos), the data is stored into a first storage region; and if the to-be-stored data belongs to structured data, the data is stored into a second storage region. Meanwhile, a feature vector of the data stored in the first storage region is extracted, and the feature vector and a directory address (i.e., a location of the data in the first storage region) of the data are associatively stored into the second storage region.

The data query apparatus 120 is mainly for the user to query/retrieve the data. In the embodiment according to the present invention, the user may query by inputting query information, which may include multiple query conditions. When the user initiates a request for querying/retrieving the data, in response to the user operation, the query information inputted by the user is acquired. Whether the query information contains a predetermined data type is determined. If the query information contains the predetermined data type, a to-be-queried feature vector is generated based on the query information. The query information inputted by the user may certainly contain the to-be-queried feature vector. In this way, the data query apparatus 120 may directly acquire the to-be-queried feature vector when it is determined that the query information contains the predetermined data type. Alternatively, the data query apparatus 120 may acquire the feature vector corresponding to the query information from an external source. The embodiments of the present invention do not impose many limitations on this. Then, from the feature vectors stored in the second storage region, at least one feature vector is matched for the to-be-queried feature vector, and the directory address associated with the feature vector is acquired. Related data, which is fetched from the first storage region according to an address pointed to by the directory address, is the query result.

FIG. 2 further shows a schematic diagram of the data storage apparatus 110 and the data query apparatus 120 according to an embodiment of the present invention.

As shown in FIG. 2, the data storage apparatus 110 includes: a determining unit 111, a first storage unit 113, a feature extraction unit 115, a second storage unit 117, and a metadata storage unit 119, wherein the second storage unit 117 has the same structure as a traditional database and is used to store structured data. Unstructured data is stored into the first storage unit 113. The feature extraction unit 115 is used to extract a feature vector of unstructured data and is used as an abstraction thereof for querying.

When a user inputs to-be-stored data, the determining unit 111 determines whether the to-be-stored data belongs to a predetermined data type. According to the embodiment of the present invention, the predetermined data type is unstructured data, including one or more of the following data types: text, pictures, XML, HTML, images, audios, videos, various reports, and the like.

According to one implementation manner of the present invention, after the determining unit 111 confirms after the determination that the to-be-stored data belongs to the predetermined data type, the first storage unit 113 stores the data and stores a storage location of the data in the first storage unit 113 as a directory address of the data. Assuming that the to-be-stored data is a picture, which is stored into the first storage unit 113 and a directory address is generated, for example, /home/ex/000001.jpg. Then, the feature extraction unit 115 extracts a feature vector of the data based on the directory address. The feature vector is transferred to the second storage unit 117, which associatively stores the feature vector with the directory address of the data. According to one embodiment of the present invention, at least one feature extraction model is pre-stored in the feature extraction unit 115. When extracting a feature vector, in one embodiment, the feature extraction unit 115 inputs a directory address of data into the feature extraction model, and the output is the feature vector of the data. In another embodiment, the feature extraction unit 115 may also input the data itself into the feature extraction model, and uses an outputted feature vector as the feature vector for the data. It should be noted that the embodiments of the present invention do not impose many limitations on how the feature vector of the data is extracted. Those skilled in the art may select an appropriate feature extraction manner according to an actual application scenario, so as to implement the data storage solutions of the present invention. Since the feature vector of the data is generated using the directory address of the data, the computing amount during feature extraction can be effectively reduced. Inputting a directory address of data into the feature extraction model to obtain the feature vector is used as an example and illustrated in what follows. In the embodiment according to the present invention, if to-be-stored data belongs to a predetermined data type, the to-be-stored data carries not only the data itself but also related description information therefor. The description information is, for example, a specified feature extraction model for extracting a feature vector of the data, and a measurement method used to compute a feature similarity level of the data. According to one embodiment, the feature extraction model may adopt various neural network models (such as a CNN, a Resnet, and the like, but not limited thereto); and the feature similarity level measurement method may adopt Euclidean distance (ED), Consine similarity, and the like, but is not limited thereto. When the to-be-stored data belongs to the predetermined data type, the metadata storage unit 119 acquires the description information of the data, and associatively stores the description information with the directory address of the data. In this way, the feature extraction unit 115 may extract the feature vector corresponding to the data based on the description information and the directory address of the data. Specifically, the feature vector of the data is extracted by calling the feature extraction model specified in the description information. Optionally, the feature extraction unit 115 extracts a corresponding embedding feature vector according to the feature extraction model specified in the description information of the data as an abstraction of the data.

In addition, since at least one feature extraction model is pre-stored in the feature extraction unit 115, the embodiment according to the present invention further includes a process for pre-training and generating these feature extraction models. A training and generating process for the feature extraction models is shown below. The process is merely used as an example, and the embodiment of the present invention is not limited thereto.

First, a pre-trained feature extraction model is constructed, and initial model parameters are set. After that, a training sample (for example, multiple images are collected as the training sample) is inputted into the pre-trained feature extraction model, and the model parameters are fine-tuned according to an output result, thereby generating a new feature extraction model. The above steps are repeated until the output of the feature extraction model meets a predetermined condition (which may be computing a loss value between the model output and the target output; and when the loss value reaches a certain condition, it is confirmed that the predetermined condition is met; and it may also be confirmed that the predetermined condition is met after the iterative training is performed for a certain number of times); and the training ends. The feature extraction model generated at this time point is used as a trained feature extraction model and stored in the feature extraction unit 115.

In some embodiments according to the present invention, each time when data is stored into the first storage unit 113, the feature extraction unit 115 synchronously extracts the feature vector of the data, and associatively stores the feature vector with the directory address into the second storage unit 117. However, this manner increases the time each time the data is stored. Therefore, in some other embodiments according to the present invention, the feature vector of the data is extracted in an asynchronous manner. That is, to-be-stored data is first stored into the first storage unit 113, and a corresponding directory address is acquired. Afterwards, feature extraction is periodically carried out for newly stored data in the first storage unit 113 (assuming at idle time, such as 1:00-5:00 AM every day; the time is not limited thereto), and the feature vectors corresponding to each piece of data are generated. The feature vectors and the directory addresses are associatively stored into the second storage unit 117.

According to another implementation manner of the present invention, after the determining unit 111 confirms after the determination that the to-be-stored data does not belong to a predetermined data type, the second storage unit 117 may directly store the data. In other words, if the to-be-stored data is structured data, it is directly stored into the second storage unit 117.

Continuing with FIG. 2, the data query apparatus 120 includes: a determining unit 121, a feature computing unit 123, a first query unit 125, and a second query unit 127.

When a user inputs query information for querying, the determining unit 121 determines whether the query information contains a predetermined data type. According to one embodiment, the query information may contain at least one query condition. For example, the query information is: querying an image that "has a similarity level of greater than 0.8 with image A, which has a review of 'nice skirt"'. In this case, two query conditions are contained, including: the similarity level with image A is greater than 0.8, and the review of the image is "nice skirt". At the same time, it may be confirmed that to-be-queried target data in the query information is an image, which belongs to the predetermined data type.

According to the implementation manner of the present invention, if the determining unit 121 confirms after the determination that the query information does not contain the predetermined data type, target data meeting the query condition is queried in said second storage unit 117 following a traditional data query manner. If the determining unit 121 confirms after the determination that the query information contains the predetermined data type, the target data meeting the query condition is queried by executing the following process.

In other words, according to the implementation manner of the present invention, the user may input multiple query conditions, which may include traditional queries based on structured data and may also include queries based on unstructured data. The determining unit 121 decides what each query condition is and then determines which manner to use for data querying. For example, the user may upload an image, and at the same time, input a speech and some text on an application interface, hoping to acquire the target data meeting each query condition at the end.

The feature computing unit 123 generates at least one to-be-queried feature vector based on the query information. According to the embodiment of the present invention, two manners may be adopted to generate the to-be-queried feature vector. A first manner is the same as the manner of extracting the feature vector by the data storage apparatus 110 described above. In response to the query information, each piece of unstructured data contained in the query information is cached separately, and corresponding directory addresses are acquired as to-be-queried directory addresses; and then, the respective to-be-queried feature vectors are generated based on the to-be-queried directory addresses. Optionally, the to-be-queried directory address is inputted into the feature extraction model, and the corresponding to-be-queried feature vector is outputted. The above example of the query information is used as an example. Image A and the text "nice skirt" are separately cached to acquire corresponding to-be-stored directory addresses, denoted as URL1 and URL2; and then the URL 1 and the URL2 are respectively inputted into the feature extraction model to obtain the respective corresponding to-be-queried feature vectors. A second manner is to directly input the unstructured data contained in the query information into the feature extraction model, and output the corresponding to-be-queried feature vector. The above example of the query information is used as an example. Image A is inputted into the feature extraction model, and the corresponding to-be-queried feature vector is outputted. The text "nice skirt" is inputted into the feature extraction model, and the corresponding to-be-queried feature vector is outputted. As described above, the feature computing unit 123 may certainly acquire the at least one to-be-queried feature vector directly. For example, the query information contains the feature vector of to-be-queried information.

It should be noted that the feature extraction model may be specified by the user when inputting the query information, and may also be pre-configured in the data query apparatus 120 (for example, for image data, a CNN model is adopted; and for text data, a ResNet model is adopted, etc.). Further, the same fixed feature extraction model may be adopted to generate all to-be-queried feature vectors. In addition, the feature computing unit 123 may call a related feature extraction model in the feature extraction unit 115 to execute the step of extracting a feature vector. The embodiments of the present invention do not impose many limitations on this. For more information about the feature extraction model, please refer to the related description above.

The feature computing unit 123 may further respectively determines at least one feature vector similar to the to-be-queried feature vector. According to one embodiment, for each to-be-queried feature vector, the feature computing unit 123 respectively determines, from a second storage region according to a specified measurement method for computing a feature similarity level, at least one feature vector similar to the to-be-queried feature vector. In the embodiment of the present invention, the second storage region is a storage region corresponding to the second storage unit 117, in which the feature vector of the unstructured data and directory address thereof are associatively stored. As described above, the directory address and the description information of the data are associatively stored in the metadata storage unit 119, and the description information also specifies the measurement method for computing the feature similarity level. Therefore, the feature computing unit 123 may compute similarity levels between the to-be-queried feature vectors and the feature vectors of each piece of data according to the measurement methods for computing the feature similarity levels and corresponding to each piece of the data stored in the second storage region, and determine at least one feature vector having a similarity level that meets the query condition.

Then, the first query unit 125 respectively acquires, from the second storage region, at least one directory address associated with the determined at least one feature vector. According to the embodiment of the present invention, the first query unit 125 maintains communication with the second storage unit 117 in order to acquire, from the second storage unit 117 for storing the structured data, the directory address associated with the feature vector.

Next, the second query unit 127 determines, from the first storage region, at least one piece of data pointed to by the acquired at least one directory address as the target data. According to the embodiment of the present invention, the second query unit 127 maintains communication with the first storage unit 115 in order to acquire, according to the directory address, the corresponding data from the first storage unit 115 for storing the unstructured data.

It should be noted that FIG. 2 is only exemplary. In actual applications, the determining unit 111 and the determining unit 121 may be set as the same unit to determine whether the received information contains data belonging to the predetermined data type. The feature extraction unit 113 and the feature computing unit 123 may be set as the same unit to extract the feature vectors of the data and compute the similarity level between the feature vectors. The first query unit 125 may also be implemented as a module in the second storage unit 117; similarly, the second query unit 127 may also be implemented as a module in the first storage unit 115, thereby separately acquiring the corresponding data from the second storage region and the first storage region. Meanwhile, in other embodiments, there may be fewer, additional, or different components in the system 100.

According to the data management system 100 of the present invention, structured data and unstructured data are stored separately, for example, the unstructured data being stored in the first storage region, and the structured data being stored in the second storage region. The feature vector of the unstructured data is generated through a built-in feature extraction service. The feature vector and a storage address (i.e., the directory address) of the unstructured data are associatively stored into the second storage region. In this way, the data management system 100 may directly support the storage of various unstructured data. At the same time, on the basis of this data storage manner, the system 100 may support not only queries for the structured data, but also semantic-based queries for various unstructured data. In addition, users do not need to have a deep understanding of related deep learning algorithms and feature extraction models, thereby effectively reducing the requirements of users and the user cost.

According to the implementation manner of the present invention, the data management system 100 may be implemented by one or more computing devices 300 as described below. In some embodiments, the data management system 100 and each component thereof, such as the data storage apparatus 110 and the data query apparatus 120, may be implemented using the computing device 300 as described below.

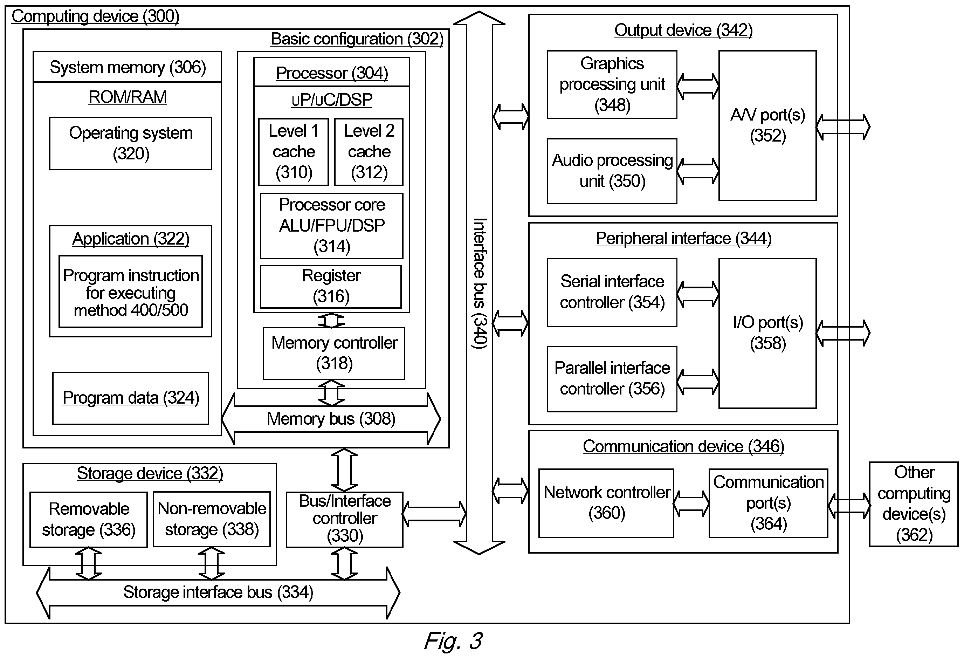

FIG. 3 shows a schematic diagram of a computing device 300 according to an embodiment of the present invention.

As shown in FIG. 3, in a basic configuration 302, the computing device 300 typically includes a system memory 306 and one or more processors 304. A memory bus 308 may be used for communication between the processors 304 and the system memory 306.

Depending on a desired configuration, the processor 304 may be a processor of any types, including but not limited to: a microprocessor (µP), a microcontroller (µC), a digital information processor (DSP), or any combination thereof. The processor 304 may include one level or multi-level caches, such as a level 1 cache 310 and a level 2 cache 312, a processor core 314, and a register 316. The exemplary processor core 314 may include an arithmetic logic unit (ALU), a floating-point unit (FPU), a digital signal processing core (DSP Core), or any combination thereof. The exemplary memory controller 318 may be used with the processor 304; or in some implementations, the memory controller 318 may be an internal part of the processor 304.

Depending on the desired configuration, the system memory 306 may be a memory of any types, including but not limited to: a volatile memory (such as a RAM), a non-volatile memory (such as a ROM, a flash memory, and the like.), or any combination thereof. The system memory 306 may include an operating system 320, one or more applications 322, and program data 324. In some implementation manners, the application 322 may be configured to perform an instruction on the operating system through one or more processors 304 by using the program data 324.

The computing device 300 may further include an interface bus 340 that facilitates communication from various interface devices (for example, an output device 342, a peripheral interface 344, and a communication device 346) to the basic configuration 302 via a bus/interface controller 330. The exemplary output device 342 includes a graphics processing unit 348 and an audio processing unit 350, which may be configured to facilitate communication with various external devices such as a display or a speaker via one or more A/V ports 352. The exemplary peripheral interface 344 may include a serial interface controller 354 and a parallel interface controller 356, which may be configured to facilitate communication with external devices, for example, an input device (such as a keyboard, a mouse, a pen, an audio input device, and a touch input device) or other peripherals (for example, a printer, a scanner, and the like) via one or more I/O ports 358. The exemplary communication device 346 may include a network controller 360, which may be disposed to facilitate communication with one or more other computing devices 362 via one or more communication ports 364 through a network communication link.

The network communication link may be an example of a communication medium. The communication medium may generally be embodied as a computer-readable instruction, a data structure, and a program module in a modulated data signal such as a carrier wave or other transmission mechanisms, and may include any information delivery medium. The "modulated data signal" may be such a signal in that one or more of data sets of the signal or the signal may be changed in a manner of encoding information in the signal. As a non-restrictive example, the communication medium may include a wired medium such as a wired network or a dedicated line network, and may include various wireless media such as a sound, radio frequency (RF), a microwave, infrared (IR), or other wireless media. The term computer-readable medium used herein may include both a storage medium and a communication medium.

The computing device 300 may be implemented as a server, for example, a file server, a database server, an application server, a WEB server, and the like, or may be implemented as a personal computer including desktop computer and notebook computer configurations. Certainly, the computing device 300 may also be implemented as a part of a small-sized portable (or mobile) electronic device. In the embodiment according to the present invention, the computing device 300 is configured to perform the data storage method 400 and the data query method 500 according to the present invention, wherein the application 322 of the computing device 300 contains multiple program instructions for executing the method 400 and the method 500 according to the present invention.

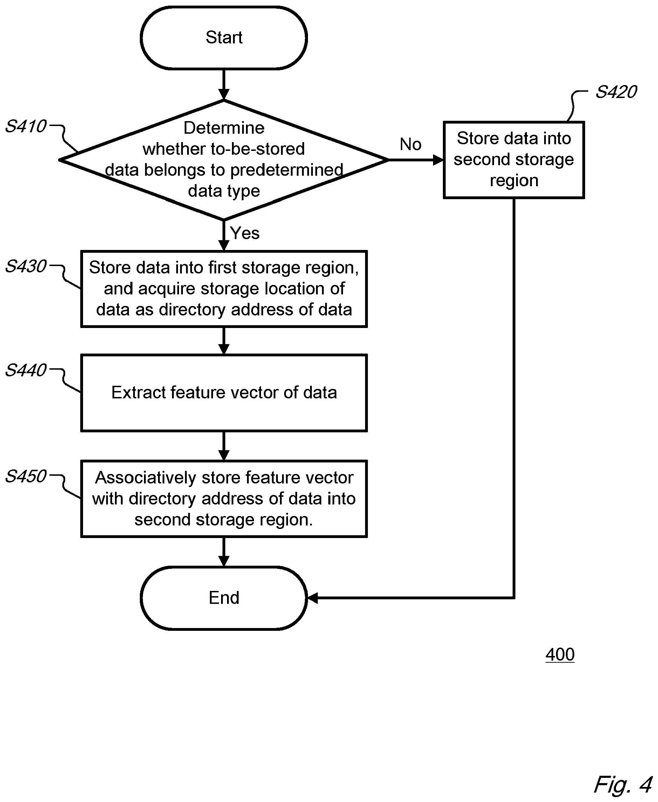

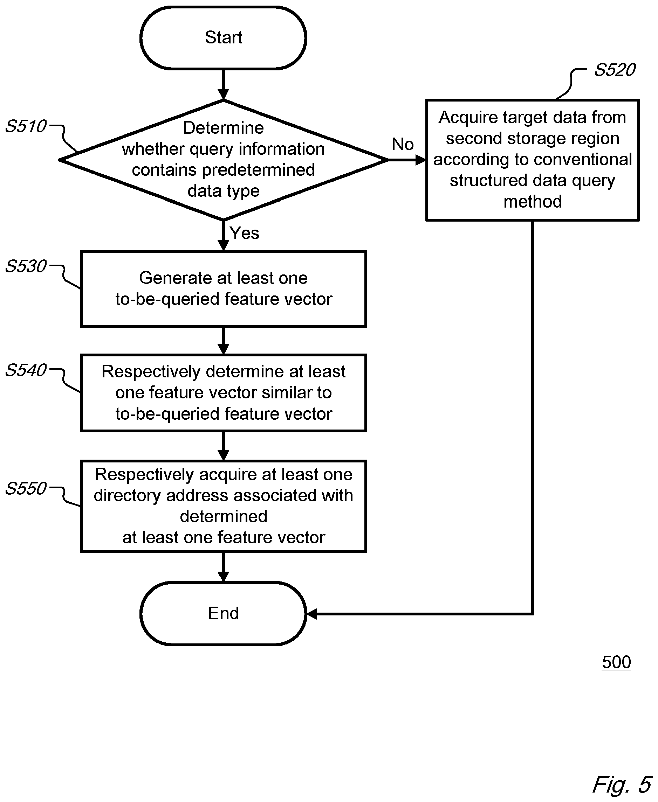

The method 400 and the method 500 for managing data storage and querying through the data management system 100 will be further elaborated below in detail with reference to FIG. 4 and FIG.5.

FIG. 4 shows a flowchart of a data storage method 400 according to an embodiment of the present invention. A process of executing the method 400 by the data storage apparatus 110 will be described below in detail in combination with FIG. 2 and the above related introduction to the data storage apparatus 110.

As shown in FIG. 4, the method 400 starts at step S410. In step S410, whether to-be-stored data belongs to a predetermined data type is determined. As described above, unstructured data is the data belonging to the predetermined data type, and the predetermined data type may include, for example, one or more of the following data types: text, pictures, XML, HTML, images, audios, and videos.

If it is confirmed after the determination that the to-be-stored data does not belong to the predetermined data type, the data is confirmed to be structured data. In a subsequent step S420, the data is stored into a second storage region (i.e., a storage region corresponds to the second storage unit 117).

If it is confirmed after the determination that the to-be-stored data belongs to the predetermined data type, in a subsequent step S430, the data is stored into a first storage region (i.e., a storage region corresponding to the first storage unit 113), and a storage location of the data is acquired and used as a directory address of the data.

Then in step S440, a feature vector corresponding to the data is extracted.

According to one embodiment, the directory address of the data is inputted into a feature extraction model, and the output is the feature vector of the data. According to another embodiment, the data itself may also be inputted to the feature extraction model to output the feature vector of the data. In addition, the feature extraction model may be one comes along with the system or specified by a user. The embodiments of the present invention do not impose many limitations on this. Generally, the feature extraction model is based on a convolutional neural network, such as a CNN

According to another embodiment, when a user inputs to-be-stored data, the user would also define the metadata of the data, the metadata being description information of the data. In the embodiment according to the present invention, the description information includes: the feature extraction model for extracting the feature vector. The data storage apparatus 110 may display to the user pre-stored feature extraction models through a drop-down menu, and the like, so that the user may select one of the feature extraction models as a model for the apparatus 110 to extract the feature vector of the data. With respect to the process of training and generating the pre-stored feature extraction models, please refer to the related description of the apparatus 110 above. Details will not be repeated herein.

In this way, in step S440, the feature vector corresponding to the data is extracted based on the description information and directory address of the data. Further, the feature extraction model for extracting the feature vector and corresponding to the data is acquired according to the description information of the data; and then the directory address of the data is inputted into the feature extraction model to output the feature vector corresponding to the data.

Additionally, in addition to the feature extraction model, the description information of the data may also include: a measurement method for computing a feature similarity level, so that in a subsequent data query process, the similarity level between the feature vector of the data and the feature vector of the to-be-queried data may be computed.

Subsequently, in step S450, the feature vector of the data and the directory address are associatively stored into the second storage region (i.e., a storage region corresponding to the second storage unit 117).

FIG. 5 shows a flowchart of a data query method 500 according to an embodiment of the present invention. A process of executing the method 500 by the data query apparatus 120 will be introduced below in detail in combination with FIG. 2 and the above related introduction to the data query apparatus 120.

As shown in FIG. 5, the method 500 starts at step S510. In step S510, in response to query information inputted by a user, whether the query information contains a predetermined data type is determined. The predetermined data type contains a data type of unstructured data, for example, text, pictures, XML, HTML, images, audios, and videos.

As described above, the query information contains at least one query condition. Whether to-be-queried data is structured data or unstructured data may be determined according to the query condition, which in turn leads to the determination of whether the query information contains the predetermined data type.

If it is confirmed after the determination that the query information contains a non-predetermined data type, in a subsequent step S520, target data is acquired from a second storage region according to a traditional query method for structured data.

If it is confirmed after the determination that the query information contains the predetermined data type, in a subsequent step S530, at least one to-be-queried feature vector is generated.

As described above, in the implementation manner according to the present invention, two manners may be adopted to generate the to-be-queried feature vector. A first manner is the same as the manner of extracting the feature vector described in the method 400. In response to the query information, each piece of unstructured data contained in the query information is cached separately, and corresponding directory addresses (i.e., storage addresses) are acquired as to-be-queried directory addresses; and then, the respective to-be-queried feature vectors are generated based on the to-be-queried directory addresses. Optionally, the to-be-queried directory address is inputted into the feature extraction model, and the corresponding to-be-queried feature vector is outputted. A second manner is to directly input the unstructured data (such as an image) contained in the query information into the feature extraction model, and output the corresponding to-be-queried feature vector. The first manner may maximally guarantee the consistency of how a feature vector is acquired; the cache size, however, is increased following this manner. The second manner, on the other hand, may reduce the cache size and improve the computing efficiency. In a practical application, those skilled in the art may consider the actual scenario and select an appropriate feature extraction manner and feature extraction model. The embodiments of the present invention do not impose many limitations on this.

It should be noted that the feature extraction model may be specified by the user when inputting the query information, may also be pre-configured in the data query apparatus 120 (for example, for image data, a CNN model is adopted; and for text data , a ResNet model is adopted, which are not limited thereto), and may be consistent with the feature extraction model adopted when the method 400 is executed. Further, the same fixed feature extraction model may be adopted to generate all to-be-queried feature vectors. For more information about the feature extraction model, please refer to the related description above.

In still other embodiments, when the user inputs the query information, the user may also input the feature vector corresponding to the to-be-queried information; or an external feature extraction model is called to generate the to-be-queried feature vector corresponding to the query information. In this way, if it is confirmed after the determination that the query information contains the predetermined data type, at least one to-be-queried feature vector is directly acquired.

Subsequently, in step S540, at least one feature vector similar to the to-be-queried feature vector is determined.

Specifically, the at least one feature vector similar to the to-be-queried feature vector is determined from a second storage region (i.e., a storage region corresponding to the second storage unit 117).

As described above, the directory address and the description information of the data are associatively stored in the metadata storage unit 119, and the description information also specifies the measurement method for computing the feature similarity level. Therefore, in step S540, the similarity levels between the to-be-queried feature vectors and the feature vectors of each piece of data may be determined according to the measurement methods, corresponding to each piece of the data stored in the second storage region, for computing the feature similarity levels, and the at least one feature vector having a similarity level that meets the query condition is determined.

Subsequently, in step S550, at least one directory address associated with the determined at least one feature vector is acquired.

As described above, the feature vector of the unstructured data and the directory address thereof are associatively stored in the second storage region. After the feature vector is acquired through step S540, the directory address associated with the feature vector is further
acquired from the second storage region.

Subsequently, in step S560, at least one piece of data pointed to by the acquired at least one directory address is determined as target data.

As described above, the unstructured data itself and the directory address thereof are associatively stored into the first storage region. Therefore, according to the acquired at least one directory address, each piece of data pointed to by each directory address may be determined from the first storage region as the target data.

The various techniques described herein may be implemented in combination with hardware or software, or combinations thereof. Therefore, the methods and devices of the present invention, or some aspects or parts of the methods and devices of the present invention may be embedded in a tangible medium, for example, a removable hard disk, a U disk, a floppy disk, a CD-ROM, or any other machine-readable storage medium, in a form of program codes (i.e., instructions). When a program is loaded into a machine such as a computer and run by the machine, the machine becomes a device for implementing the present invention.

When the program codes are run on a programmable computer, a computing device generally includes a processor, a storage medium readable by the processor (including a volatile memory and a non-volatile memory and/or a storage element), at least one input apparatus, and at least one output apparatus, wherein the memory is configured to store the program codes. The processor is configured to execute the data storage method and/or data query method of the present invention according to the instructions in the program codes stored in the memory.

By way of example and not limitation, a readable medium includes a readable storage medium and a communication medium. The readable storage medium stores information such as a computer-readable instruction, a data structure, a program module, or other data. The communication medium generally embodies computer-readable instructions, data structures, program modules, or other data in a modulated data signal such as a carrier wave or other transmission mechanisms, and includes any information delivery medium. Any combination of the above is also included in the scope of the readable medium.

In the specification provided herein, algorithms and displays are not inherently related to any specific computers, virtual systems, or other devices. Various general-purpose systems may also be used with the examples of the present invention. On the basis of the above description, a structure required to construct this type of system is apparent. In addition, the present invention is not directed to any specific programming language. It should be understood that various programming languages may be used to implement the content of the present invention described herein. The above description of a specific language is for the purpose of disclosing the best implementation manner of the present invention.

In the specification provided herein, a large number of specific details are illustrated. However, it should be appreciated that the embodiments of the present invention may be implemented without these specific details. In some instances, well-known methods, structures, and techniques have not been shown in detail in order not to obscure the understanding of the specification.

Similarly, it should be appreciated that in the above description of exemplary embodiments of the present invention, various features of the present invention are sometimes grouped together in a single embodiment, figure, or description thereof for the purpose of streamlining the disclosure and aiding in the understanding of one or more of the various inventive aspects. The methods of the disclosure, however, should not be interpreted as reflecting the following intention that the claimed invention requires more features than those expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of the present invention.

Those skilled in the art should understand that the modules, units, or components of the device in the example disclosed herein may be disposed in the device as described in the embodiment, or alternatively may be located in one or more devices different from the device of this example. The modules in the above-described examples may be combined into one module or may be further divided into multiple sub-modules.

Those skilled in the art will appreciate that the modules in the device in the embodiments may be adaptively changed and disposed in one or more devices different from the devices in the embodiments. The modules, units, or components in the embodiments may be combined into one module, unit, or component. In addition, the modules, units, or components may be divided into multiple sub-modules, sub-units, or sub-components. Unless at least some of these features and/or processes or elements are mutually exclusive, the features disclosed in the present specification (including the appended claims, the abstract, and the accompanying drawings) and the processes or elements in any method or device disclosed as such may be combined in any combination. Unless stated otherwise, each of the features disclosed in the present specification (including the appended claims, the abstract, and the accompanying drawings) may be replaced by an alternative feature for the same, equivalent, or similar objective.

Moreover, those skilled in the art can appreciate that although some embodiments described here include some features but not the other features in other embodiments, the features in the different embodiments may be combined into further different embodiments without departing from the scope of the present invention. For example, any of the embodiments claimed in the appended claims can be applied in any combination.

Furthermore, some of the embodiments are described herein as methods or combinations of method elements that can be implemented by a processor of a computer system or by other apparatuses that implement the functions. Accordingly, a processor having the necessary instructions for implementing the methods or the method elements forms an apparatus for implementing the methods or method elements. In addition, the elements of the apparatus embodiments described herein are examples of apparatuses for implementing functions performed by the elements for the purpose of implementing the present invention.

As used herein, the use of ordinal numbers "first," "second," "third," and the like to describe generic objects simply indicates different examples involving similar objects unless otherwise specified, and is not intended to imply that the objects so described must have a given order in time, space, order, or in any other ways.

Although the present invention has been described in terms of a limited number of embodiments, those skilled in the art, benefiting from the above description, will appreciate that other embodiments may be conceivable within the scope of the present invention. In addition, it should be noted that the language used in the present specification is selected primarily for readability and instructional purposes, not for explaining or limiting the subject matter of the present invention. Accordingly, many modifications and changes will be apparent to those skilled in the art without departing from the scope and spirit of the appended claims. For the scope of the present invention, the disclosure of the present invention is illustrative rather than restrictive. The scope of the present invention is defined by the appended claims.

## Claims

1. A data storage method, comprising the steps of:
determining whether to-be-stored data belongs to a predetermined data type;
if the data belongs to the predetermined data type, storing the data into a first storage region, and acquiring a directory address of the data;
extracting a feature vector of the data; and
associatively storing the feature vector with the directory address of the data into a second storage region.

2. The method according to claim 1, further comprising the step of:
if it is confirmed after the determination that the to-be-stored data does not belong to the predetermined data type, storing the data into the second storage region.

3. The method according to claim 1 or 2, wherein the step of extracting the feature vector of the data comprises:
inputting the directory address of the data into a feature extraction model to output the feature vector of the data.

4. The method according to claim 1 or 2, wherein before the step of extracting the feature vector of the data, the method further comprises the step of:
acquiring description information of the data, and associatively storing the description information with the directory address of the data.

5. The method according to claim 4, wherein the description information at least comprises: a feature extraction model for extracting the feature vector and a measurement method for computing a feature similarity level.

6. The method according to claim 5, wherein the step of extracting the feature vector of the data further comprises:
extracting, based on the description information and the directory address of the data, the feature vector corresponding to the data.

7. The method according to claim 6, wherein the step of extracting, based on the description information and the directory address of the data, the feature vector corresponding to the data further comprises:
acquiring, according to the description information of the data, the feature extraction model used for extracting the feature vector and corresponding to the data; and
inputting the directory address into the feature extraction model to output the feature vector corresponding to the data.

8. The method according to any one of claims 1-7, wherein the predetermined data type comprises one or more of the following data types: text, pictures, XML, HTML, images, audios, and videos.

9. A data storage apparatus, comprising:
a determining unit, suitable for determining whether to-be-stored data belongs to a predetermined data type;
a first storage unit, suitable for storing the data and generating a directory address of the data when the data belongs to the predetermined data type;
a feature extraction unit, suitable for extracting a feature vector of the data; and
a second storage unit, suitable for associatively storing the feature vector with the directory address of the data.

10. The apparatus according to claim 9, wherein the second storage unit is further suitable for storing the data when the to-be-stored data does not belong to the predetermined data type.

11. The apparatus according to claim 9 or 10, further comprising:
a metadata storage unit, suitable for acquiring description information of the data when the to-be-stored data belongs to the predetermined data type, and associatively storing the description information with the directory address of the data.

12. A data query method, comprising the steps of:
generating at least one to-be-queried feature vector;
determining at least one feature vector similar to the to-be-queried feature vector;
acquiring at least one directory address associated with the determined at least one feature vector; and
determining at least one piece of data pointed to by the acquired at least one directory address as target data.

13. The method according to claim 12, wherein before the step of generating at least one to-be-queried feature vector, the method further comprises:
in response to query information of a user, determining whether the query information contains a predetermined data type; and
if the query information contains the predetermined data type, generating the at least one to-be-queried feature vector.

14. The method according to claim 13, wherein the predetermined data type comprises one or more of the following data types: text, pictures, XML, HTML, images, audios, and videos.

15. The method according to any one of claims 12-14, wherein the step of determining at least one feature vector similar to the to-be-queried feature vector comprises:
respectively determining the at least one feature vector similar to the to-be-queried feature vector from a second storage region according to a specified measurement method for computing a feature similarity level.

16. The method according to any one of claims 12-15, wherein the step of generating at least one to-be-queried feature vector further comprises:
in response to the query information, acquiring at least one to-be-queried directory address; and
generating, based on the at least one to-be-queried directory address, the at least one to-be-queried feature vector.

17. The method according to any one of claims 12-16, wherein the step of acquiring at least one directory address associated with the determined at least one feature vector comprises:
respectively acquiring, from the second storage region, the at least one directory address associated with the determined at least one feature vector.

18. The method according to any one of claims 12-17, wherein the step of determining the at least one piece of data pointed to by the acquired at least one directory address as the target data comprises:
determining, from a first storage region, the at least one piece of data pointed to by the acquired at least one directory address as the target data.

19. A data query method, comprising the steps of:
acquiring at least one to-be-queried feature vector;
determining at least one feature vector similar to the to-be-queried feature vector;
acquiring at least one directory address associated with the determined at least one feature vector; and
determining at least one piece of data pointed to by the acquired at least one directory address as target data.

20. A data query apparatus, comprising:
a determining unit, suitable for determining whether query information contains a predetermined data type;
a feature computing unit, suitable for generating at least one to-be-queried feature vector based on the query information, and is further suitable for determining at least one feature vector similar to the to-be-queried feature vector;
a first query unit, suitable for acquiring, from a second storage region, at least one directory address associated with the determined at least one feature vector; and
a second query unit, suitable for determining, from a first storage region, the at least one piece of data pointed to by the acquired at least one directory address as the target data.

21. The apparatus according to claim 20, wherein the data comprises one or more of the following data types: text, pictures, XML, HTML, images, audios, and videos.

22. A data management system, comprising:
the data storage apparatus according to any one of claims 9-11; and
the data query apparatus according to claim 20 or 21.

23. A computing device, comprising:
at least one processor; and
a memory having a program instruction stored therein, wherein the program instruction is configured to be executed by the at least one processor, and the program instruction comprises an instruction for executing the method according to any one of claims 1-8, and an instruction for executing the method according to any one of claims 12-19.

24. A readable storage medium having a program instruction stored therein, wherein when the program instruction is read and executed by a computing device, the computing device is enabled to execute the method according to any one of claims 1-8 and the method according to any one of claims 12-19.
